# EUROPÄISCHE PATENTANMELDUNG

(11) **EP 2 607 760 A2**
(43) Veröffentlichungstag der Anmeldung: **26.06.2013**
(21) Anmeldenummer: 12197625.2
(22) Anmeldetag: 18.12.2012
(51) Int. Cl.: F16K 27/02, E05F 3/12

(54) **Ventil für einen Antrieb einer Tür oder eines Fensters oder dergleichen sowie ein Verfahren zum Fügen des Ventils**

(30) Priorität: 20.12.2011 DE 102011089119
(71) Anmelder: GEZE GmbH, 71229 Leonberg (DE)
(72) Erfinder: Peltsch, Björn, 70192 Stuttgart (DE); Walter, Ingo, 70184 Stuttgart (DE)

(57) **Zusammenfassung**

Es wird ein Ventil für einen Antrieb einer Tür, eines Fensters oder dergleichen beschrieben, mit einem Aufnahmeelement und einer Ventilhülse, wobei die Ventilhülse an einem Verbindungsbereich des Aufnahmeelements durch Schweißen festgelegt ist. Am Verbindungsbereich ist wenigstens eine Aufnahme vorgesehen, in der ein Energierichtungsgeber angeordnet ist, der mit der Ventilhülse einen den Energierichtungsgeber umgebenden Raum zur Aufnahme von Schweißaustrieb ausbildet. Weiterhin wird ein Verfahren zum Fügen des Ventils angegeben.

## Beschreibung

Die Erfindung betrifft ein Ventil für einen Antrieb einer Tür oder eines Fensters oder dergleichen nach dem Oberbegriff des Anspruchs 1 sowie ein Verfahren zum Fügen des Ventils nach Anspruch 8.

Aus der DE 10 2010 009 173 A1 ist ein Ventil zur Ansteuerung eines Strömungskanals bekannt, welches mit einem Ventilkörper in dem Strömungskanal zur Bildung einer Drosselstelle angeordnet ist, wobei temperaturabhängig ein Durchströmen eines Fluides durch den Strömungskanal mittels des Ventils beeinflussbar ist, so dass temperaturbedingte Viskositätsänderungen des Fluides ausgleichbar sind. Das Ventil weist ein temperaturabhängig ansteuerbares Bypassventil auf, welches eine Querschnittsveränderung der Drosselstelle in Abhängigkeit der temperaturbedingten Viskositätsänderungen des Fluids bewirkt. Es ist der Druckschrift zu entnehmen, dass das Ventilgehäuse zweiteilig ausgebildet sein kann, wobei die beiden Gehäuseteile durch Verschrauben, Pressen, Kleben oder Schweißen miteinander verbunden sein können, wobei dies jedoch nicht weiter offenbart ist.

Eine Verbindung der Gehäuseteile durch Schweißen könnte aufgrund der Geometrie der Gehäuseteile möglicherweise nicht die erforderliche Festigkeit ergeben. Insbesondere die sehr dünne Wandstärke eines der beiden Teile, hier der Ventil hülse, kann zu einem Aufwölben oder Aufplatzen führen, beispielsweise durch einen beim Schweißen entstehenden Materialauftrag, wodurch das Ventil möglicherweise sich beim Einschrauben in dem Strömungskanal verklemmen würde.

Der Erfindung liegt die Aufgabe zugrunde, ein gattungsgemäßes, zweiteiliges Ventil zu verbessern, um ein sicheres Fügen der Gehäuseteile durch Schweißen zu ermöglichen.

Die Aufgabe wird durch die Merkmale der Ansprüche 1 und 8 gelöst.

Die Unteransprüche bilden vorteilhafte Ausgestaltungsmöglichkeiten der Erfindung.

Antriebe für Türen oder Fenstern oder dergleichen, weisen ein in einem Aufnahmeraum eines Gehäuses des Antriebs angeordnetes Getriebe auf, das mit einer Abtriebswelle und einem Hebelarm zum Öffnen und Schließen des Flügels zusammenwirkt. In dem mit Hydraulikflüssigkeit gefüllten Aufnahmeraum ist ein mit dem Getriebe zusammenwirkender Kolben verschiebbar angeordnet, wobei im Gehäuse Strömungskanäle für die Hydraulikflüssigkeit vorgesehen sind, in denen Ventile zur Steuerung des Verhaltens des Antriebs angeordnet sein können. Es kann ein Ventil vorgesehen sein, das beispielsweise ein thermisches Kompensationselement aufweist, wodurch eine Änderung des Verhaltens des Antriebs, die durch eine Änderung der Umgebungstemperatur bewirkte Viskositätsänderung der Hydraulikflüssigkeit entsteht, ausgeglichen wird.

Das im Wesentlichen zweiteilige, aus einem Aufnahmeelement und einer Ventilhülse gebildete Ventil ist zur Anordnung in einer Ventilbohrung in einem Strömungskanal des hydraulischen Antriebs vorgesehen. Das Aufnahmeelement ist mit einem Gewinde versehen, das zum Einschrauben des Ventils in den Strömungskanal und zum Einstellen gegenüber einem in dem Strömungskanal vorgesehenen Ventilsitz, mit dem die Ventilhülse des Ventils korrespondiert, vorgesehen ist. Nach außen hin ist das Ventil mit wenigstens einer Dichtung, die den Strömungskanal nach außen hin abdichtet, sowie einer Werkzeugaufnahme zum Einschrauben und Einstellen des Ventils versehen.

Am Aufnahmeelement ist ein zapfenartiger Verbindungbereich zur Festlegung der dünnwandigen Ventilhülse angeordnet. In der hohlen Ventilhülse ist damit ein Aufnahmeraum für Steuerelemente des Ventils, wie beispielsweise ein temperaturabhängiges Stellglied, gebildet, wodurch die mittels eines Ventilkegels der Ventilhülse eingestellte Drosselwirkung durch eine oder mehrere zusätzliche Bypassöffnungen im Ventilkegel durch das Stellglied beeinflusst werden kann. Beim Schweißen, insbesondere beim Ultraschallschweißen von Kunststoffen, wird eines der zu fügenden Teile mit einer Vertiefung und das andere Teil mit einer Erhebung versehen, um das während des Schweißvorgangs verdrängte Material aufzunehmen und den Schweißvorgang zu begünstigen, was aufgrund des dünnwandigen Ventilkörpers nicht möglich ist.

Aufgrund der geringen Abmessungen der Ventilhülse, welche einen Außendurchmesser von ca. 6 mm und eine Wandstärke von nur ca. 0,5 mm aufweist, ist die durch Ultraschallschweißen vorgesehene Verbindung mit dem Aufnahmeelement durch die ausschließliche Anordnung einer Aufnahme für den Schweißaustrieb des während des Schweißvorgangs verdrängten Materials und einen im Wesentlichen spitz zulaufenden, das Schweißen durch Ultraschall begünstigenden Energierichtungsgeber in der am Aufnahmeelement angeordneten Aufnahme vorgesehen.

Damit ist es möglich, die zylindrische Ventilhülse auf den ebenfalls zylindrischen Verbindungsbereich passgenau zentrisch aufzuschieben, wodurch eine exakte, fluchtende Anordnung von Aufnahmeelement und Ventilhülse mit einer gemeinsamen Mittelachse erreicht wird. Somit ist die exakte Positionierung des Ventilkegels des Ventils, welcher durch das Aufnahmeelement in dem Strömungskanal zentriert ist, gegenüber dem Ventilsitz im Strömungskanal gegeben.

Im Nachfolgenden wird ein Ausführungsbeispiel in der Zeichnung anhand der Figuren näher erläutert.

Dabei zeigen:

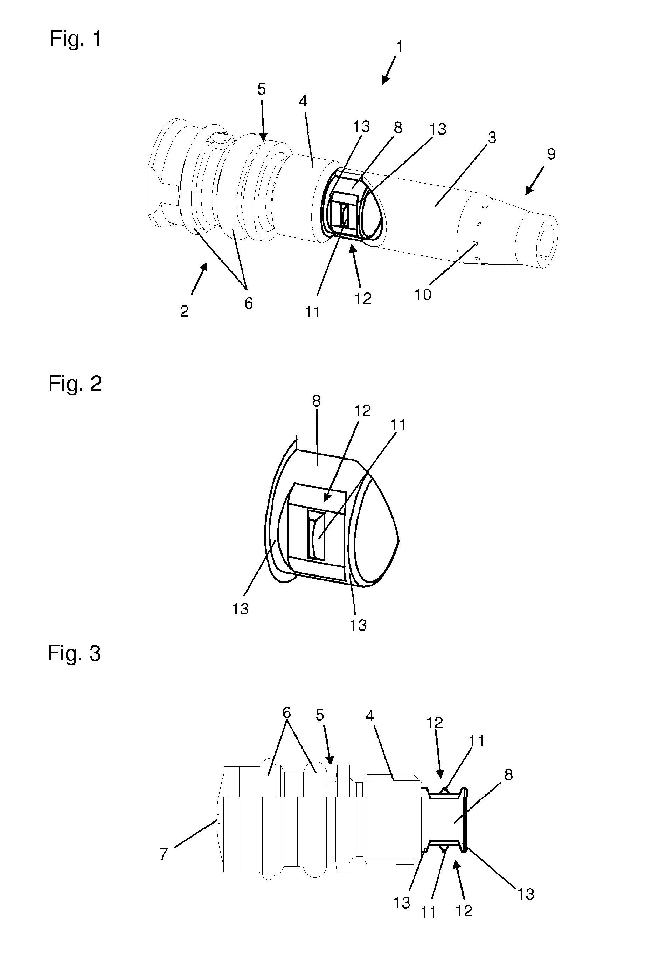

- Fig. 1: eine Schrägbild eines zweiteiligen Ventils mit einem Teilschnitt im Verbindungsbereich;
- Fig. 2: den Verbindungsbereich gemäß Fig. 1 vergrößert im Ausschnitt dargestellt;
- Fig. 3: eine Seitenansicht auf das Aufnahmeelement des Ventils;
- Fig. 4: einen vergrößerten Ausschnitt des Verbindungsbereichs des Aufnahmeelements mit aufgesteckter Ventilhülse gemäß Fig. 3;
- Fig. 5: eine Seitenansicht auf das Ventil gemäß Fig. 1 nach dem Fügevorgang;
- Fig. 6: ein Schnitt des Ventils gemäß Fig. 5.

In den Figuren ist ein Ventil 1 gezeigt, das im Wesentlichen zweiteilig aus einem Aufnahmeelement 2 und einer Ventilhülse 3 gebildet ist. Das Aufnahmeelement 2 dient der Anordnung des Ventils 1 in einer Ventilbohrung in einem Strömungskanal eines hydraulischen Antriebs, beispielsweise eines Türschließers, wobei am Aufnahmeelement 2 ein Gewinde 4 angeordnet ist, das zum Einschrauben des Ventils 1 in den Strömungskanal vorgesehen ist. Am Aufnahmeelement 2 ist weiterhin eine Nut 5 zur Aufnahme einer Dichtung 6 vorgesehen, um den Strömungskanal nach außen hin abzudichten. Es können, wie in den Figuren gezeigt, auch noch weitere Dichtungen 6 vorhanden sein. Eine Werkzeugaufnahme 7 am Aufnahmeelement 2 ist vorgesehen, um das Ventil 1 in den Strömungskanal einzuschrauben und einzustellen. Die Einstellung des Ventils 1 erfolgt in bekannter Weise durch Drehen des Ventils 1, wobei das Ventil 1 entlang des Gewindes 4 längs seiner Erstreckung gegenüber einem Ventilsitz im Strömungskanal verlagert wird.

Das Aufnahmeelement 2 weist weiterhin einen zapfenartigen Verbindungbereich 8 auf, der zur Festlegung der Ventilhülse 3 am Aufnahmeelement 2 vorgesehen ist. In der hohlen Ventilhülse 3 ist damit ein Aufnahmeraum für Steuerelemente, wie beispielsweise eines temperaturabhängigen Stellglieds des Ventils 1 gebildet, wobei das Stellglied mit wenigstens einer am Ventilkegel 9 angeordneten Bypassöffnung 10 zusammenwirken kann.

Aufgrund der geringen Wandstärke der Ventilhülse 3 von ca. 0,5 mm ist die Verbindung mit dem Aufnahmeelement 2 durch Ultraschallschweißen vorgesehen. Um beim Ultraschallschweißen eine qualitativ hochwertige, feste Verbindung zu gewährleisten, ist es erforderlich, an einem der zu fügenden Bauteile einen sogenannten Energierichtungsgeber 11 für die Sonotrode 15 auszubilden, beispielsweise als Spitze oder keilförmigen Steg, dessen Spitze der Sonotrode 15 zugewandt ist. An dem anderen der beiden zu fügenden Bauteile ist eine Aufnahme 12 für den Schweißaustrieb, also für das während des Schweißvorgangs verdrängte Material, vorzusehen.

Aufgrund der geringen Wandstärke und des Umstandes, dass die zylindrische Ventilhülse 3 - nach dem Einbringen beispielsweise des thermischen Stellgliedes in die Ventilhülse 3 - auf den ebenfalls im Wesentlichen zylindrischen Verbindungsbereich 8 vor dem Fügen passgenau aufzuschieben ist, um eine Zentrierung und eine exakt fluchtende Lage der beiden Teile zu erreichen, werden sowohl der Energierichtungsgeber 11 als auch die Aufnahme 12 nur auf einem der zu fügenden Bauteile, nämlich dem Verbindungsbereich 8 des Aufnahmeelements 2 angeordnet.

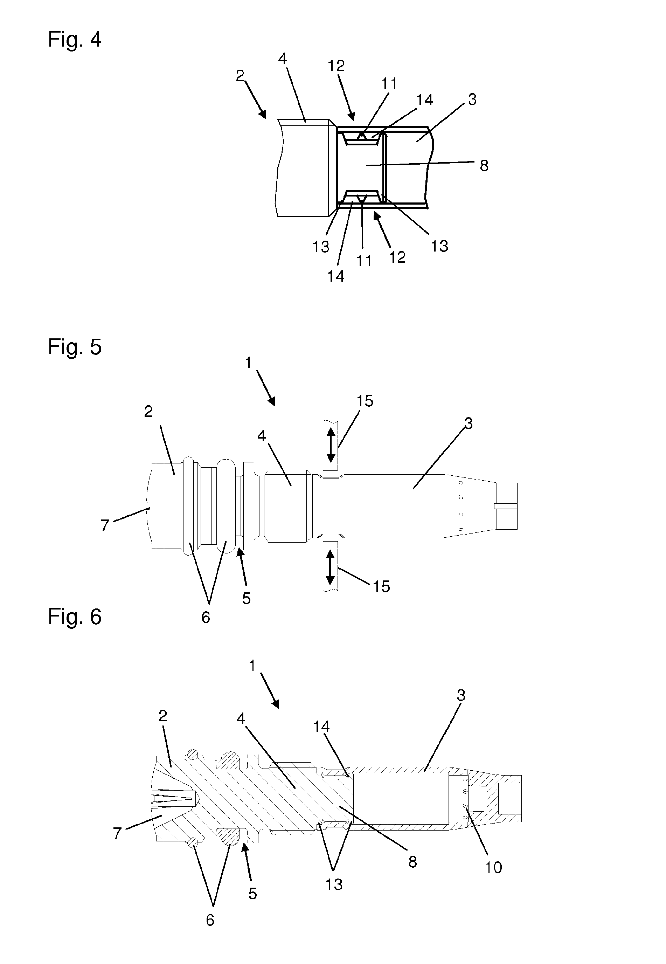

Die am Verbindungsbereich 8 vorgesehene Aufnahme 12, welche nach außen hin durch die Wandung der Ventilhülse 3 abgeschlossen ist, erstreckt sich vorteilhaft nicht über die gesamte Längserstreckung des Verbindungsbereichs 8, so dass beiderseits der Aufnahme 12 jeweils ein zylindrischer Rand 13 besteht, welcher die Ventilhülse 3 sicher auf dem Verbindungsbereich 8 führt und positioniert. Der so gebildete Raum 14, in dem der Energierichtungsgeber 11 angeordnet ist, kann den Schweißaustrieb aufnehmen, wie es in der Fig. 4 gezeigt ist. Es können am Verbindungsbereich 8 mehrere Aufnahmen 12 vorgesehen sein. Die Aufnahme 12 kann auch ringförmig umlaufend um den zylindrischen Verbindungsbereich 8 angeordnet sein, wobei der Energierichtungsgeber 11 als nach außen hin spitz zulaufender Ring ausgebildet sein kann, und wobei beiderseits des ringförmigen Energierichtungsgebers 11 jeweils ein ringförmiger Raum 14 zur Aufnahme des Schweißaustriebs gebildet ist.

In den Fig. 5 und 6 ist das Ventil 1 nach dem Ultraschallschweißen gezeigt, wobei die Wandung der Ventilhülse 3 durch die Sonotroden 15 in die Aufnahme 12 des Verbindungsbereichs 8 eingedrückt und mit der Aufnahme 12, insbesondere dem Energierichtungsgebern 11, verschmolzen ist. Die Pfeile in den Sonotroden 15 zeigen die Bewegungsrichtung derselben für den Schweißvorgang an.

### Liste der Referenzzeichen

- 1: Ventil
- 2: Aufnahmeelement
- 3: Ventilhülse
- 4: Gewinde
- 5: Nut
- 6: Dichtung
- 7: Werkzeugaufnahme
- 8: Verbindungsbereich
- 9: Ventilkegel
- 10: Bypassöffnung
- 11: Energierichtungsgeber
- 12: Aufnahme
- 13: Rand
- 14: Raum
- 15: Sonotrode

## Patentansprüche

1. Ventil (1) für einen Antrieb einer Tür, eines Fensters oder dergleichen, mit einem Aufnahmeelement (2) und einer Ventilhülse (3), wobei die Ventilhülse (3) an einem Verbindungsbereich (8) des Aufnahmeelements (2) durch Schweißen festgelegt ist,
**dadurch gekennzeichnet,**
**dass** am Verbindungsbereich (8) wenigstens eine Aufnahme (12) vorgesehen ist, in der ein Energierichtungsgeber (11) angeordnet ist, der mit der Ventilhülse (3) einen den Energierichtungsgeber (11) umgebenden Raum (14) zur Aufnahme von Schweißaustrieb ausbildet.

2. Ventil nach Anspruch 1,
**dadurch gekennzeichnet, dass** der Verbindungsbereich (8) beiderseits der Aufnahme (12) komplementär zur auf den Verbindungsbereich (8) aufsteckbaren Ventilhülse (3) ausgebildet ist.

3. Ventil nach Anspruch 1 oder 2,
**dadurch gekennzeichnet, dass** die Aufnahme (12) als eine ringförmig um den zylindrischen Verbindungsbereich (8) umlaufend angeordnete Aufnahme (12) ausgebildet ist.

4. Ventil nach Anspruch 3,
**dadurch gekennzeichnet, dass** der Energierichtungsgeber (11) als nach außen hin spitz zulaufender Ring innerhalb der ringförmigen Aufnahme (12) ausgebildet ist.

5. Ventil nach Anspruch 1 oder 2,
**dadurch gekennzeichnet, dass** der Energierichtungsgeber (11) als Kegel oder Kegelstupf ausgebildet ist.

6. Ventil nach Anspruch 1 oder 2,
**dadurch gekennzeichnet, dass** der Energierichtungsgeber (11) als ein spitz zulaufender Steg ausgebildet ist.

7. Ventil nach Anspruch 1,
**dadurch gekennzeichnet, dass** die Ventilhülse (3) ein Aufnahmeraum für Steuerelemente des Ventils (1) bildet.

8. Verfahren zum Fügen des Ventils nach Anspruch 1,
**dadurch gekennzeichnet, dass** die Wandung der Ventilhülse (3) beim Schweißen durch eine Sonotrode (15) in die Aufnahme (12) eingebracht wird, wobei der Energierichtungsgeber (11) beim Schweißvorgang mit der Ventilhülse (3) verschmilzt.
